# EUROPÄISCHE PATENTANMELDUNG

(11) **EP 2 737 832 A1**
(43) Veröffentlichungstag der Anmeldung: **04.06.2014**
(21) Anmeldenummer: 13194750.9
(22) Anmeldetag: 28.11.2013
(51) Int. Cl.: A47J 27/21, A47J 43/046, H05B 6/12

(54) **Elektrisches Gerät zum Erwärmen eines insbesondere flüssigen Lebensmittels**

(30) Priorität: 30.11.2012 DE 202012104657 U
(71) Anmelder: WIK Far East Ltd., North Point, Hong Kong (CN)
(72) Erfinder: Steckhan, Markus, 45481 Mülheim a. d. Ruhr (DE)
(74) Vertreter: Haverkamp, Jens

(57) **Zusammenfassung**

Ein elektrisches Gerät zum Erwärmen eines insbesondere flüssigen Lebensmittels mit einem Behälter 2 zur Aufnahme des zu erwärmenden Lebensmittels und mit einer Einrichtung 9, 10; 9.1, 10.1 zum Erwärmen eines in dem Behälter 2 befindlichen Lebensmittels ist dadurch bestimmt, dass die Erwärmungseinrichtung ist 9, 10; 9.1, 10.1 induktiv arbeitend ausgelegt und zum Einen über eine in einem Behälterunterbau 6, 6.1 angeordnete Induktionsspuleneinheit zum Erzeugen eines elektromagnetischen Wechselfeldes sowie über eine auf der zum Behälterinneren weisenden Seite des Bodens 4 befindlichen, aus einem durch Induktion erwärmbaren, insbesondere ferromagnetischen Material hergestellte Wärmeplatte 10, 10.1 verfügt.

## Beschreibung

Die Erfindung betrifft ein elektrisches Gerät zum Erwärmen eines insbesondere flüssigen Lebensmittels mit einem Behälter zur Aufnahme des zu erwärmenden Lebensmittels und mit einer Einrichtung zum Erwärmen eines in dem Behälter befindlichen Lebensmittels.

Derartige elektrische Geräte sind hinlänglich bekannt, beispielsweise aus US 7,669,517 B2. Bei diesem Gerät bildet der Behälter mit einem Behälterunterbau, in dem die zum Betrieb des Gerätes benötigten elektrischen/elektronische Komponenten angeordnet sind, eine zusammengehörige Einheit aus. Zu den in dem Behälterunterbau angeordneten elektrischen/elektronischen Komponenten zählt eine Heizeinrichtung zum Erwärmen des Bodens des Behälters. Die elektrische Heizeinrichtung ist als Widerstandsheizung ausgelegt und an der zu dem durch den Behälterunterbau bereitgestellten Installationsraum weisenden Seite des Bodens des Behälters angebracht. Der Behälter selbst besteht bei einem solchen Gerät aufgrund der benötigten guten Wärme leitenden Eigenschaften aus Edelstahl.

Derartige Geräte werden u. a. zum Aufschäumen von Milch oder einer milchbasierten Flüssigkeit eingesetzt, und zwar vornehmlich im Zusammenhang mit der Bereitung von Kaffeegetränken. Eine solche Rühreinrichtung umfasst einen Behälter zur Aufnahme der zu behandelnden Flüssigkeit. Zum Aufschäumen von in den Behälter eingebrachter Flüssigkeit dient ein im Bereich des Bodens des Behälters drehbar gelagertes Rührwerkzeug, das für die Zwecke einer Milchaufschäumung als Schaumschläger ausgeführt ist. Der Schaumschläger ist typischerweise aus einem spiralförmig gewundenen und zu einem Ring gehaltenen Drahtkörper gebildet. Gehalten wird der Schaumschläger an einem Tragekörper als Teil des Rührwerkzeuges. Zum Zwecke der Lagerung des Rührwerkzeuges im Bereich des Bodens des Behälters verfügt der Behälterboden über eine in das Behälterinnere ragende Ausprägung. Der Tragekörper umgreift die Ausprägung, die somit als Lager für das Rührwerkzeug dient. Das Rührwerkzeug kann werkzeuglos von seiner Lagerung abgenommen und umgekehrt auf diese aufgesetzt werden.

Zum Bewegen des Rührwerkzeuges dient ein Magnetantrieb. Zu diesem Zweck verfügt das Rührwerkzeug über zwei einander bezüglich der Drehachse desselben diametral gegenüberliegende Permanentmagnete. Als Aktor zum Bewegen des Rührwerkzeuges dient ein Elektromotor, der unterhalb des Bodens in dem Installationsraum angeordnet ist. Auf der Motorachse des Elektromotors sitzen zwei einander diametral gegenüberliegende Permanentmagnete, die innerhalb der als Hohlform ausgeführten Ausprägung des Bodens, auf der das Rührwerkzeug sitzt, drehbeweglich angeordnet sind. Diese auf der Motorachse des Elektromotors sitzenden Permanentmagnete wirken mit denjenigen des Rührwerkzeuges zusammen. Mithin sind die Permanentmagnete paarweise magnetisch gekoppelt. Die magnetische Kopplungsrichtung liegt in radialer Richtung. Da die auf der Achse des Elektromotors sitzenden Magnete die Antriebsmagnete sind, können die komplementären Magnete des Rührwerkzeuges als Slave-Magnete angesprochen werden.

Derartige elektrische Geräte haben sich bewährt. Dennoch wäre es wünschenswert wenn ein solches Gerät in seiner Handhabbarkeit verbessert wäre und wenn größere Freiheiten in der designerischen Auslegung des Behälters bestehen würden.

Vor dem vorstehend umrissenen Hintergrund liegt der Erfindung somit die Aufgabe zugrunde, ein eingangs genanntes elektrisches Gerät dergestalt auszubilden, dass den vorstehenden Anforderungen zumindest teilweise Rechnung getragen wird.

Gelöst wird diese Aufgabe erfindungsgemäß durch ein eingangs genanntes, gattungsgemäßes elektrisches Gerät, bei dem die Erwärmungseinrichtung induktiv arbeitend ausgelegt ist und zum Einen über eine in einem Behälterunterbau angeordnete Induktionsspuleneinheit zum Erzeugen eines elektromagnetischen Wechselfeldes sowie über eine auf der zum Behälterinneren weisenden Seite des Bodens befindlichen, aus einem durch Induktion erwärmbaren, insbesondere ferromagnetischen Material hergestellte Wärmeplatte verfügt.

Bei einem solchen elektrischen Gerät ist die elektrische Heizeinrichtung ausgelegt, um eine in den Behälter aufgenommene Flüssigkeit induktiv zu erwärmen. Zu diesem Zweck ist in dem Behälterunterbau eine Induktionsspuleneinheit angeordnet, die das für eine induktive Erwärmung notwendige magnetische Wechselfeld erzeugt. Der Induktionsspuleneinheit zugehörig ist neben zumindest einer elektrischen Spule eine Steuereinheit, die die Spule zur Erzeugung des Wechselfeldes entsprechend ansteuert. Dem Behälter ist eine Wärmeplatte zugeordnet. Diese ist aus einem zum induktiven Erwärmen geeigneten Material hergestellt, vorzugsweise aus einem ferromagnetischen Material. Diese Wärmeplatte ist typischerweise als Einleger auf den Boden des Behälters aufgelegt.

Von besonderem Vorteil dieses Konzeptes ist, dass der Behälter, ohne elektrische Verbindungen trennen zu müssen, von dem Behälterunterbau abgenommen werden kann. Mithin ist eine Handhabung des Behälters, etwa zum Ausgießen von darin erwärmter und/oder aufgeschäumter Flüssigkeit vereinfacht, da der durch die notwendigen elektrischen/elektronischen Einbauten typischerweise etwas schwerere Behälterunterbau nicht mit gehandhabt werden muss.

Vorteilhaft ist zudem, dass eine Erwärmung von in dem Behälter befindlicher Flüssigkeit sehr viel spontaner erfolgt als bei vorbekannten Geräten dieser Art, vor allem dann, wenn die Wärmeplatte als Einleger auf den Boden des Behälters aufgelegt ist. Die Wärmeplatte bildet sodann das Heizelement, wodurch die in dem Behälter befindliche Flüssigkeit unmittelbar von dem Heizelement erwärmt wird.

Bei diesem Konzept sind auch die designerischen Freiheiten in der Gestaltung des Behälters verbessert, und zwar da der Behälter im Unterschied zu vorbekannten Behältern nicht notwendigerweise aus einem Wärme gut leitenden Material hergestellt sein muss. Vielmehr kann bei diesem Konzept der Behälter aus Glas oder auch einem keramischen Werkstoff, insbesondere Porzellan hergestellt sein. Die Verwendung eines durchscheinenden oder durchsichtigen Materials wie Glas erlaubt sodann eine optische Kontrolle des Inhaltes des Behälters bei einer Flüssigkeitsbehandlung. Gerade bei einem Aufschäumvorgang ist dieses nicht nur interessant zu beobachten, sondern lässt auch eine Kontrolle des Aufschäumvorganges zu, indem durch Inaugenscheinnahme erkannt werden kann, wann ein bestimmter Aufschäumgrad erreicht ist.

Bei einer Konzeption des elektrischen Gerätes, bei dem die Wärmeplatte als Einleger auf den Boden des Behälters aufgelegt ist, ist es zweckmäßig, den Einleger mit Füßen auszurüsten, die auf der ins Behälterinnere weisenden Oberseite des Bodens aufstehen. Der Abstand zum Boden ist dabei typischerweise gering und beträgt zumeist nur wenige Millimeter. Dieses erfolgt vor dem Hintergrund, den Abstand zu der Induktionsspule der Induktionsspuleneinheit im Behälterunterbau nicht zu groß werden zu lassen. Gleichwohl wird durch diese Ausgestaltung der Vorteil erzielt, dass die Wärmeplatte vollständig von zu erwärmender Flüssigkeit umgeben ist. Somit wird bei dieser Ausgestaltung die gesamte Oberfläche der Wärmeplatte für die Erwärmung von in dem Behälter befindlicher Flüssigkeit genutzt. Der direkte Wärmeverlust von der Wärmeplatte in den Behälter ist auf ein Minimum reduziert. Es wird quasi die gesamte, in der Wärmeplatte erzeugte Wärme somit auf direktem Wege an die Flüssigkeit abgegeben. Zur weiteren Steigerung der Erwärmungseffizienz ist in einer Weiterbildung vorgesehen, in die Wärmeplatte Durchbrechungen einzubringen, typischerweise rundliche Öffnungen, angeordnet nach Art eines Rasters.

Das beanspruchte Konzept des elektrischen Gerätes erlaubt die Ausbildung der Spule der Induktionsspuleneinheit in einer Art und Weise, dass die Spule einen für die Aufnahme anderer Aggregate vorgesehenen Bauraum einfasst, bzw. ein solcher Bauraum von der Spule freigehalten ist. Es ist also möglich, die Induktionsspule derart auszuführen, dass ein ringförmiges Wechselfeld erzeugt wird. Insofern kann bei einer solchen Ausgestaltung die Wärmeplatte grundsätzlich auch als Ring ausgeführt sein. Genutzt werden kann eine solche Ausgestaltung der Induktionsspule, damit in den hierdurch bereitgestellten Bauraum beispielsweise ein Aktor zum rotatorischen Antreiben eines in dem Behälter befindlichen Rührwerkzeuges positioniert werden kann. Angetrieben wird das innerhalb des Behälters befindliche Rührwerkzeug durch eine magnetische Kopplung desselben an den in dem Behälterunterbau befindlichen Aktor. Auf diese Weise kann nicht nur das Rührwerkzeug ohne Weiteres und damit werkzeuglos in den Behälter eingesetzt und aus diesem herausgenommen werden, sondern der Antrieb beeinträchtigt auch eine möglicherweise vorgesehene Abnehmbarkeit des Behälters von seinem Behälterunterbau nicht. Das Rührwerkzeug ist typischerweise auf eine Ausprägung des Bodens bzw. der darauf aufliegenden Wärmeplatte aufgesetzt und daran geführt. Das Rührwerkzeug selbst verfügt über einen, vorzugsweise sogar mehrere, zu einer Ringstruktur angeordnete Permanentmagnete. Angetrieben sind diese durch eine Spuleneinheit, aufgebaut aus mehrere, ebenfalls zu einer Ringstruktur angeordnete Spulen, deren magnetische Achsen parallel zueinander angeordnet sind. Angesteuert werden die einzelnen Spulen dieser Spuleneinheit durch eine Steuereinheit zum Erzeugen eines magnetischen Drehfeldes. Die Spulen dieser Spuleneinheit und die Permanentmagnete des Rührwerkzeuges befinden sich in einer bezüglich der Längsachse des Behälters fluchtenden oder mehr oder weniger fluchtenden Anordnung zueinander.

Durchaus möglich ist auch eine Ausgestaltung, bei der das für die Erwärmung genutzte magnetische Wechselfeld auch genutzt wird, um ein Rührwerkzeug, wie vorstehend beschrieben, innerhalb des Behälters in Drehbewegung zu versetzen.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine schematisierte Längsschnittdarstellung eines elektrischen Gerätes umfassend einen auf einen Behälterunterbau aufgestellten Behälter und
- **Fig. 2:**: das elektrische Gerät der Figur 1 in einer weiteren Ausgestaltung.

Ein elektrisches Gerät 1, ausgebildet zum Erwärmen einer Flüssigkeit, umfasst einen Behälter 2. Bei dem dargestellten Ausführungsbeispiel handelt es sich bei dem Behälter 2 um einen Glasbehälter. Der Behälter 2 verfügt über eine umlaufende Wand 3 und einen Boden 4. Der Innenraum 5 des Behälters 2 dient zur Aufnahme einer zu erwärmenden Flüssigkeit. Der Behälter 2 des dargestellten Ausführungsbeispiels ist auf einen Behälterunterbau 6 aufgesetzt. Der Behälterunterbau 6 beinhaltet einen Installationsraum 7, in dem in nicht näher dargestellter Art und Weise die für einen Betrieb des Gerätes 1 benötigten elektrischen/elektronischen Komponenten enthalten sind, wie beispielsweise ein Transformator, eine oder mehrere Steuereinrichtungen etc. Die Oberseite 8 des Behälterunterbaus 6 bildet die Aufstandsfläche für den Behälter 2, der ohne Weiteres hiervon abgenommen und darauf wieder abgestellt werden kann. Die Oberseite 8 des Behälterunterbaus 6 ist aus einem nicht-magnetischen Material gefertigt, beispielsweise aus einem keramischen Material.

Das elektrische Gerät 1 verfügt über eine Heizeinrichtung, die induktiv arbeitend ausgelegt ist. In dem Installationsraum 7 des Behälterunterbaus 6 ist zu diesem Zweck eine Induktionsspuleneinheit zum Erzeugen eines magnetischen Wechselfeldes unterhalb der Oberseite 8 angeordnet. Teil der Induktionsspuleneinheit ist eine Induktionsspule 9, die in nicht näher dargestellter Art und Weise an eine die Ansteuerung der Induktionsspule 9 vornehmende Steuereinheit angeschlossen ist. Bei der Induktionsspule 1 handelt es sich um eine an sich bekannt Induktionsspule, wie diese beispielsweise zum Betreiben von Induktionsherden eingesetzt wird. Die Induktionsspuleneinheit mit ihrer Induktionsspule 9 wirkt mit einer Wärmeplatte 10 zusammen, die bei dem dargestellten Ausführungsbeispiel auf den Boden 4 des Behälters 2 aufgelegt ist. Die Wärmeplatte 10 ist aus einem Edelstahl hergestellt und weist somit ferromagnetische Materialeigenschaften auf. Die Wärmeplatte 10 ist prinzipiell scheibenförmig ausgeführt. Durch in Richtung zum Boden 4 des Behälters 2 hin eingebrachte Ausprägungen sind Füße 11, 11.1 ausgebildet. Durch die Füße 11, 11.1 ist die eigentliche Wärmeplatte 10 von dem Boden 4 des Behälters 2 etwas beabstandet. Dieses bedeutet, dass die Wärmeplatte 10, wenn in dem Innenraum 5 des Behälters 2 Flüssigkeit eingebracht ist, quasi insgesamt von der zu erwärmenden Flüssigkeit umgeben ist. In die Wärmeplatte 10 sind zur Vergrößerung ihrer Oberfläche zudem Durchbrechungen 12 eingebracht. Die Durchbrechungen 12 sind nach Art eines Rasters über die Oberfläche der Wärmeplatte 10 verteilt angeordnet.

Zum Erwärmen von in dem Innenraum 5 des Behälters 2 eingebrachter Flüssigkeit wird die Induktionsspule 9 der Induktionsspuleneinheit zum Erzeugen eines magnetischen Wechselfeldes angesteuert. Das magnetische Wechselfeld erwärmt die Wärmeplatte 10, durch die wiederum die in dem Behälter 2 befindliche Flüssigkeit erwärmt wird.

Die Wärmeplatte 10 ist ohne Weiteres aus dem Behälter 2 herausnehmbar und in diesen einlegbar und kann daher unabhängig von dem Behälter 2 gereinigt werden. Dieses ist insbesondere für diejenigen Fälle zweckmäßig, bei denen in dem Behälter 2 Flüssigkeiten wie beispielsweise Milch oder dergleichen erwärmt werden. Durch die Möglichkeit des Abnehmens des Behälters 2 von seinem Behälterunterbau ist eine einfache Handhabung desselben möglich.

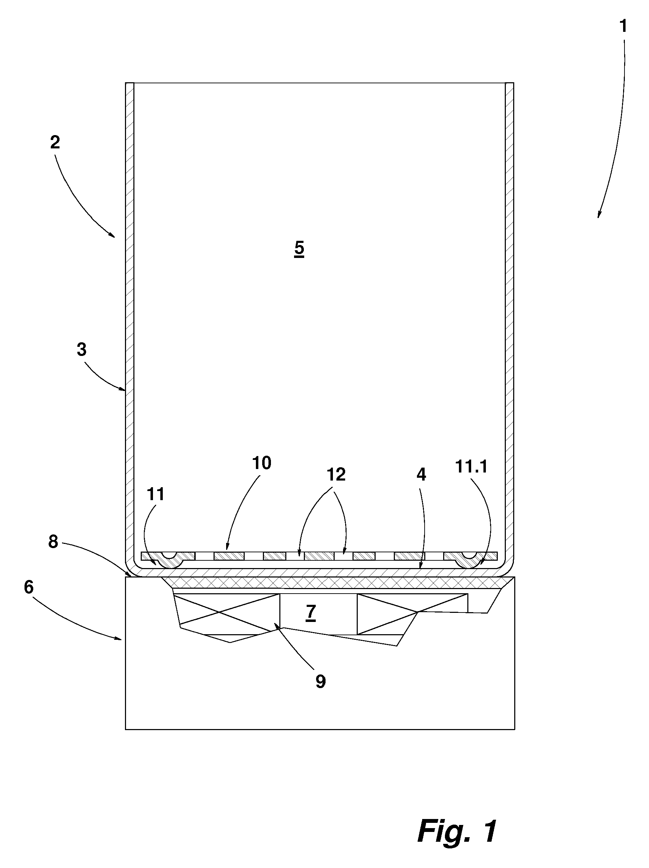

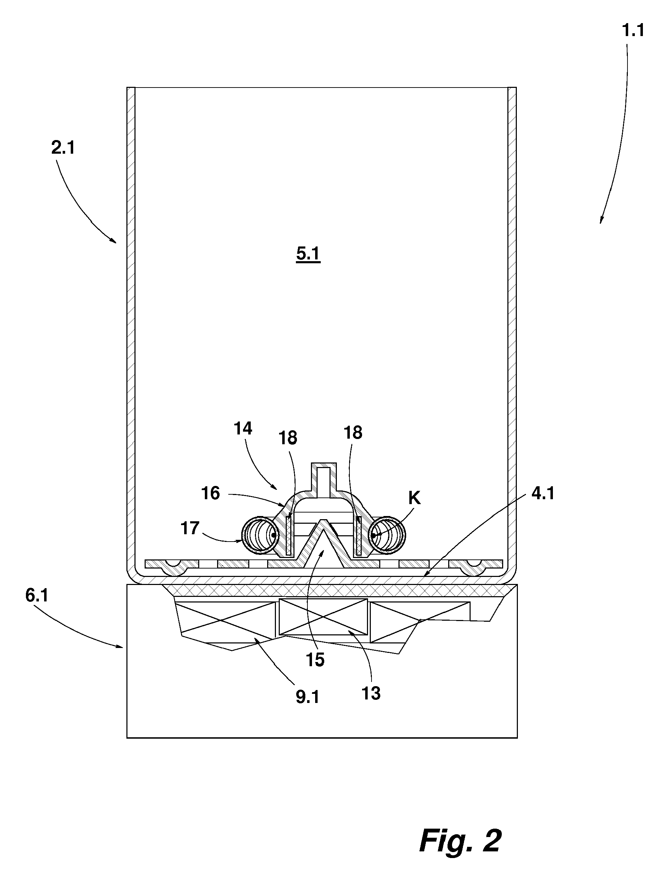

Figur 2 zeigt ein weiteres elektrisches Gerät 1.1, welches prinzipiell aufgebaut ist wie das Gerät 1 der Figur 1. Daher gelten die diesbezüglichen Ausführungen gleichermaßen für das Gerät 1.1. Das Gerät 1.1 unterscheidet sich von dem Gerät 1 der Figur 1 dadurch, dass dieses über eine zusätzliche Rühreinrichtung verfügt. Zu diesem Zweck ist die Induktionsspule 9.1 der Induktionsspuleneinheit ausgeführt, dass in dem Spuleninneren Raum zum Anordnen eines weiteren Aktors, hier: einer zweiten Spuleneinheit 13 geschaffen ist. Die Spuleneinheit 13 besteht ihrerseits aus mehreren einzelnen Spulen, die an eine Steuereinheit zum Ansteuern der einzelnen Spulen angeschlossen sind. Mit der Spuleneinheit 13 wird ein magnetisches Drehfeld erzeugt. Insofern bildet die Spuleneinheit 13 den als Aktor ausgeführten Stator, dem ein Rührwerkzeug 14 als Rotor zugeordnet ist. Das Rührwerkzeug 14 sitzt auf einer domförmigen Ausprägung 15 der Wärmeplatte 10.1. Die Ausprägung 15 befindet sich in der Flucht der Längsachse der Spuleneinheit 13. Das Rührwerkzeug 14 umfasst einen ringförmigen Tragekörper 16. Der durch nach innen abragende Stützkörper gebildete Innendurchmesser des Tragekörpers 16 ist um das notwendige Bewegungsspiel größer als der Außendurchmesser der Ausprägung 15. Der die Ausprägung 15 einfassende Teil des Tragekörpers 16 trägt außenseitig als eigentlichen Rührkörper einen Schaumschläger 17.

Bei dem dargestellten Ausführungsbeispiel ist der Schaumschläger 17 durch einen spiralförmig gewundenen und zu einem ringförmigen Körper gehaltenen Draht gebildet. Gehalten wird die Ringform der Spirale durch einen nach Art eines Sprengringes konzipierten Klemmring K. Der Tragekörper 16 verfügt über mehrere, bei dem dargestellten Ausführungsbeispiel acht Permanentmagnete 18, die mit einheitlichem Winkelabstand voneinander innerhalb des Tragekörpers 16 angeordnet sind. Diese Permanentmagnete 18 weisen eine Längserstreckung auf, die parallel zur Längsachse des Behälters 2.1 verläuft. Die Permanentmagnete 18 sind innerhalb des Tragekörpers 16 gekapselt. Der Tragekörper 16 selbst ist ein Kunststoffspritzgussteil. In einer anderen Ausgestaltung verfügt der Tragekörper über Magnetaufnahmen, in die die Permanentmagnete im Anschluss an den Herstellungsprozess des Tragekörpers eingesetzt werden.

Bei einer Ansteuerung der Spulenanordnung 13 zum Generieren eines magnetischen Drehfeldes wird das Rührwerkzeug 14 aufgrund entsprechender Anordnung der Permanentmagnete 18 in Rotation versetzt. Die magnetische Achse der Spulen der Spuleneinheit 13 sind zu diesem Zweck parallel zueinander ausgerichtet und verlaufen somit parallel zur Längsachse des Behälters 2.1 bzw. des Gerätes 1.1. Damit bildet das Rührwerkzeug 14 den Rotor zu dem durch die Spulenanordnung 13 gebildeten Stator. Beide Bauteile bilden zusammen einen bürstenlosen Gleichstrommotor. Bei einem Antrieb des Rührwerkzeuges 14 wird durch die Steuereinheit entsprechend der angesteuerten Spulen der Spulenanordnung 13 die durch die Spulen generierte Magnetkraft unmittelbar auf die Permanentmagnete 18 des Rührwerkzeuges 14 übertragen. Mithin ist eine unmittelbare Kopplung zwischen der das magnetische Drehfeld erzeugenden Spulenanordnung 13 als Aktor und den hierdurch angetriebenen Permanentmagneten 18 des Rührwerkzeugs 14 gegeben. Gleichzeitig kann bei einem Betrieb der Induktionsspuleneinheit durch die Induktionsspule 9.1 die in dem Innenraum 5.1 des Behälters 2.1 enthaltene Flüssigkeit erwärmt werden. Daher eignet sich das elektrische Gerät 1.1 vor allem mit seinem Rührwerkzeug 14 zum Aufschäumen von Milch oder einer milchbasierten Flüssigkeit, welcher Milchschaum gerne im Zusammenhang mit Kaffee- bzw. Kaffee-Milch-Mischgetränken, wie beispielsweise Cappuccino verwendet wird.

### Bezugszeichenliste

- 1, 1.1: Elektrisches Gerät
- 2, 2.1: Behälter
- 3: Wand
- 4: Boden
- 5,5.1: Innenraum
- 6, 6.1: Behälterunterbau
- 7: Installationsraum
- 8: Oberseite
- 9,9.1: Induktionsspule
- 10, 10.1: Wärmeplatte
- 11, 11.1: Fuß
- 12: Durchbrechung
- 13: Spuleneinheit
- 14: Rührwerkzeug
- 15: Ausprägung
- 16: Tragekörper
- 17: Schaumschläger
- 18: Permanentmagnet

- K: Klemmring

## Patentansprüche

1. Elektrisches Gerät zum Erwärmen eines insbesondere flüssigen Lebensmittels mit einem Behälter (2) zur Aufnahme des zu erwärmenden Lebensmittels und mit einer Einrichtung (9, 10; 9.1, 10.1) zum Erwärmen eines in dem Behälter (2) befindlichen Lebensmittels, **dadurch gekennzeichnet, dass** die Erwärmungseinrichtung (9, 10; 9.1, 10.1) induktiv arbeitend ausgelegt ist und zum Einen über eine in einem Behälterunterbau (6, 6.1) angeordnete Induktionsspuleneinheit zum Erzeugen eines elektromagnetischen Wechselfeldes sowie über eine auf der zum Behälterinneren weisenden Seite des Bodens (4) befindlichen, aus einem durch Induktion erwärmbaren, insbesondere ferromagnetischen Material hergestellte Wärmeplatte (10, 10.1) verfügt.

2. Gerät nach Anspruch 1, **dadurch gekennzeichnet, dass** der Behälter (2) aus Glas oder aus einem keramischen Werkstoff hergestellt ist.

3. Gerät nach Anspruch 1 oder 2, **dadurch gekennzeichnet, dass** die Wärmeplatte (10, 10.1) mehrere Füße (11, 11.1) aufweist, auf denen diese mit geringem Abstand zur Oberseite des Bodens (4) des Behälters (2) auf diesem aufsteht.

4. Gerät nach einem der Ansprüche 1 bis 3, **dadurch gekennzeichnet, dass** die Wärmeplatte (10, 10.1) mehrere, nach Art eines Rasters darin eingebrachte Durchbrechungen (12) aufweist.

5. Gerät nach einem der Ansprüche 1 bis 4, **dadurch gekennzeichnet, dass** die Wärmeplatte (10, 10.1) aus einem Edelstahl hergestellt ist.

6. Gerät nach einem der Ansprüche 1 bis 5, **dadurch gekennzeichnet, dass** die Induktionsspuleneinheit eine Ringspule (9, 9.1) umfasst und innerhalb der ringförmigen Spule (9, 9.1) Raum zum Anordnen eines oder mehrerer weiterer Aktoren (13) vorhanden ist.

7. Gerät nach Anspruch 6, **dadurch gekennzeichnet, dass** das elektrische Gerät (1.1) mit einer Rühreinrichtung, insbesondere zum Aufschäumen von in dem Behälter (2.1) enthaltener Flüssigkeit, umfassend ein Rührwerkzeug (14) und einen in dem Behälterunterbau (6.1) in dem von der ringförmigen Induktionsspule (9.1) freigelassenen Bauraum angeordneten Aktor zum Antreiben des Rührwerkzeuges (14), ausgestattet ist, wobei der Aktor als Stator eine aus mehreren einzelnen Spulen gebildete ringförmige elektrische Spulenanordnung (13) aufweist, welche Spulenanordnung (13) zum Erzeugen eines magnetischen Drehfeldes an eine Steuereinheit angeschlossen ist, dass das Rührwerkzeug (14), mit zumindest einem Permanentmagneten (18) ausgerüstet, einen Rotor in Bezug auf die Spulenanordnung (13) bildet und dass der Rotor und der Stator derart zueinander angeordnet sind, dass ein durch den Aktor bereitgestelltes magnetisches Drehfeld zum Antreiben des Rührwerkzeuges (14) auf den zumindest einen Permanentmagneten (18) des Rührwerkzeuges (14) wirkt.

8. Gerät nach Anspruch 7, **dadurch gekennzeichnet, dass** die Wärmeplatte (10.1) eine in das Behälterinnere (5.1) hineinragende Ausprägung (15) trägt, auf die das Rührwerkzeug (14) aufsetzbar ist.

9. Gerät nach Anspruch 7 oder 8, **dadurch gekennzeichnet, dass** die einzelnen Spulen der Spulenanordnung (13) mit ihrer magnetischen Achse parallel zueinander und parallel oder etwa parallel zur Längsachse des Behälters (2.1) ausgerichtet sind.

10. Gerät nach einem der Ansprüche 7 bis 9, **dadurch gekennzeichnet, dass** das Rührwerkzeug (14) einen Tragekörper (16) aufweist, in oder an dem der oder die Permanentmagnete (18) gehalten sind, und der einen spiralförmig geformten und von einem den Tragekörper (16) zumindest teilweise einfassenden Ring (K) gehaltenen Aufschäumkörper (17) trägt.

11. Gerät nach einem der Ansprüche 1 bis 10, **dadurch gekennzeichnet, dass** der Behälter (2, 2.1) von dem Behälterunterbau (6, 6.1) lösbar, insbesondere auf diesen lediglich aufgestellt ist.
